# EUROPÄISCHE PATENTSCHRIFT

(11) **EP 1 362 473 B1**
(45) Veröffentlichungstag und Bekanntmachung des Hinweises auf die Patenterteilung: **05.10.2011**
(21) Anmeldenummer: 02716794.9
(22) Anmeldetag: 20.02.2002
(51) Int. Cl.: H04N 1/024, H04N 1/028

(54) **VORRICHTUNG UND VERFAHREN ZUM ZEILENFÖRMIGEN BELEUCHTEN EINES OBJEKTES MITTELS LEDs UND EINES ELLIPTISCHEN SPIEGELS**
DEVICE AND METHOD FOR LINEAR ILLUMINATION OF AN OBJECT USING LEDS AND AN ELLIPTICAL MIRROR
DISPOSITIF ET PROCEDE DESTINES A L'ECLAIRAGE LINEAIRE D'UN OBJET A L'AIDE DE DIODES ELECTROLUMINESCENTES ET D'UN MIROIR ELLIPTIQUE

(30) Priorität: 20.02.2001 DE 10108075
(43) Veröffentlichungstag der Anmeldung: 19.11.2003
(73) Patentinhaber: Chromasens GmbH, 78467 Konstanz (DE)
(72) Erfinder: SCHNITZLEIN, Markus, 78315 Radolfzell (DE); ALLWEIER, Arnold, 78476 Allensbach (DE)
(74) Vertreter: Ganahl, Bernhard
(86) Internationale Anmeldenummer: PCT/EP2002/001797
(87) Internationale Veröffentlichungsnummer: WO 2002/067567

(56) Entgegenhaltungen:
- US-A- 4 287 414
- US-A- 4 422 100
- PATENT ABSTRACTS OF JAPAN vol. 1997, no. 03, 31. März 1997 (1997-03-31) & JP 08 307610 A (NIKON CORP), 22. November 1996 (1996-11-22)

## Beschreibung

Die Erfindung betrifft eine Vorrichtung zum zeilenförmigen Beleuchten eines Objektes. Ferner betrifft die Erfindung ein Verfahren zum zeilenförmigen Beleuchten eines Objektes und ein Abtastsystem.

Eine typische Anwendung für eine Vorrichtung zum zeilenförmigen Beleuchten eines Objektes ist ein Bildaufnahmesystem, bei dem ein Sensor, beipsielsweise eine Kamera, grafische Elemente einer Vorlage erfaßt, diese grafischen Elemente digitalisiert und die Bilddaten weiterverarbeitet werden. Die Qualität eines Bildaufnahmesystems hängt direkt von der Lichtmenge ab, die dem Sensor bei der Abtastung zur Erzeugung der entsprechenden Signale zur Verfügung steht. Es ist daher wünschenswert, insbesondere im Bereich schneller Zeilen-Abtastsysteme, eine große Lichtmenge zur Verfügung zu stellen, da hierdurch für die nachfolgende Signalverarbeitung ein hoher Signal-Rausch-Abstand bereitgestellt wird. Weiterhin ist es erforderlich, eine Lichtquelle mit möglichst geringer Verlustleistung einzusetzen, die eine hohe Zeitstabilität und Temperaturstabilität besitzt.

Lichtemittierende Dioden, sogenannte LEDs, haben für die Anwendung in Bildaufnahmesystemen sehr gute Eigenschaften im Hinblick auf Lebensdauer, Zeitstabilität, Temperaturstabilität und Effizienz der Lichtausbeute. Bekannte Abtastsysteme, die LED-Zeilen benutzen, bündeln die Strahlung mithilfe von Stablinsen oder Fresnel-Linsen. Derartige Systeme werden für mönochromatisches Licht genutzt.

Aufgrund neuerer Entwicklungen stehen nunmehr polychromatische LEDs zur Verfügung, die auch weißes Licht emittieren. Derartige LEDs haben jedoch eine geringe Licht-Leistungsdichte, so daß sie nur sehr eingeschränkt in Bildaufnahmesystemen eingesetzt werden können. Die Verwendung von Linsen komponenten, beispielsweise von Stablinsen oder Fresnel-Linsen bei polychromatischem Licht, führt zu erheblichen chromatischen Abbildungsfehlern. Diese chromatischen Abbildungsfehler äußern sich in Farbfehlern an den Fokusrändern. Bei der Abtastung farbiger grafischer Bildelemente ist es jedoch erforderlich, eine homogene Farbtemperatur für das gesamte Ausleuchtungsfeld zu besitzen, um eine fehlerhafte Abtastung zu vermeiden. Daher ist es nur mit großem Aufwand möglich, die Lichtstrahlung polychromatischer LEDs mithilfe von Linsensystemen zu bündeln.

Aus der US-A-5,828,050 ist ein optisches Abtastsystem bekannt, das mit einem gewölbten schwenkbaren Spiegel arbeitet. Die Strahlung einer monochromatischen LED wird durch den Spiegel als Leuchtfleck auf ein abzutastendes Objekt gerichtet. Der Empfangsstrahlengang einer Lichtempfangsdiode wird über denselben Spiegel geführt, so daß die im Leuchtfleck beleuchteten grafischen Elemente bei der Schwenkbewegung des Spiegels abgetastet werden.

In der US-A-5,412,205 ist ein Abtastsystem mit einem ortsfest angeordneten Spiegel beschrieben, der im Querschnitt ellipsenförmig ist. Eine langgestreckte Fluoreszenzröhre ist in der ersten Brennlinie des Spiegels angeordnet, das abzutastende Dokument in der zweiten Brennlinie. Die Strahlung der Fluoreszenzröhre wird durch den Spiegel zeilenförmig auf das Dokument fokussiert.

Aus der JP 08-307610A mit Abstract ist eine Bild-Lesevorrichtung bekannt, die als Lichtquelle eine LED verwendet. Diese LED hat einen elliptischen Spiegel, wobei die LED in einem Brennpunkt des Spiegels und der andere Brennpunkt des Spiegels auf dem zu lesenden Bild angeordnet ist.

Weiterhin wird auf den folgenden Stand der Technik verwiesen: JP 2000-312 305 A, FR 1 237 467, DE-OS 2 217 421, US 6,133,565, JP 56-106 257 A mit Abstract, DE 195 32 877 A1, DE 41 23 916 C2. In diesen Dokumenten wird die Verwendung von elliptischen Spiegeln im Zusammenhang mit digitalen Kameras und Abtastvorrichtungen beschrieben.

Dokument US-A-4287 bildet den Oberbegriff des unabhängigen Anspruchs.

Es ist Aufgabe der Erfindung, eine Vorrichtung zum Beleuchten eines Objektes anzugeben, das einen kompakten Aufbau hat und eine hohe Beleuchtungslichtmenge zur Verfügung stellt.

Diese Aufgabe wird für eine Vorrichtung durch die Merkmale des Anspruchs 1 gelöst. Vorteilhafte Weiterbildungen sind Gegenstand der abhängigen Ansprüche.

Gemäß der Erfindung wird zur Strahlungsbündelung ein ortsfest angeordneter Spiegel verwendet. Dieser Spiegel hat zwei Brennpunkte. Die Erfindung zeichnet sich dadurch aus, dass mehrere Spiegel mit jeweils einem ersten Brennpunkt und einem zweiten Brennpunkt vorgesehen sind, wobei je Spiegel mindestens eine LED im ersten Brennpunkt angeordnet ist, die Strahlung in Richtung des Spiegels aussendet, und dass die von dem Spiegel reflektierte Strahlung in einem gemeinsamen zweiten Brennpunkt gesammelt wird.

Durch die Verwendung von LEDs hat die Vorrichtung einen kompakten Aufbau sowie weitere günstige Eigenschaften im Hinblick auf Lebensdauer der Lichtquelle, Zeitstabilität, Temperaturstabilität und Lichtausbeute. Durch die Verwendung eines ortsfesten Spiegels bleibt der Strahlengang übersichtlich, da für die Lage der beiden Brennlinien des Spiegels große kontruktive Freiheitsgrade gegeben sind. Durch die Verwendung des Spiegels entstehen keine wellenlängenabhängigen chromatischen Abbildungsfehler, so daß bei Verwendung von LEDs, die weißes Licht aussenden, an den Fokusrändern keine Farbfehler entstehen. Dies ist vorteilhaft, wenn die Vorrichtung zum zeilenförmigen Beleuchten eines Objektes in ein Abtastsystem einbezogen wird, bei dem farbige Bildelemente mittels eines zeilenförmig arbeitenden Abtastsystems abgetastet werden sollen, beispielsweise bei digitalen Scannersystemen oder Kopiersystemen Gemäß der Erfindung hat der zylinderförmige Abschnitt des Spiegels die Form der inneren Mantelfläche eines elliptischen Zylinders. Der elliptisch geformte Spiegel besitzt die Eigenschaft, Strahlung, die aus dem ersten Brennpunkt der Ellipse emittiert wird, vollständig in den zweiten Brennpunkt zu fokussieren. Aufgrund der geometrischen Reflexion der Spiegeloberfläche treten keine chromatischen Fehler auf. Daher ist ein derartiges Spiegelsystem besonders gut geeignet für polychromatisches Licht. Bei Verwendung eines elliptischen Zylinders entsteht anstelle eines Brennpunktes eine Brennlinie, wodurch eine optimale zeilenförmige Beleuchtung eines Objektes ermöglicht wird. Diese zeilenförmige Beleuchtung ist besonders vorteilhaft, wenn ein Objekt digital abgetastet werden muß.

Gemäß weiteren Aspekten der Erfindung wird ein Verfahren unter Verwendung der genannten Vorrichtung angegeben. Ferner wird ein System zum Abtasten eines Objektes unter Einbeziehung eines Sensorsystems, beispielsweise einer Kamera angegeben.

Ausführungsbeispiele der Erfindung werden im folgenden anhand der Zeichnung erläutert. Darin zeigt:
- Figur 1: eine Anordnung einer LED auf einer Leiter- platte und die Abstrahlcharakteristik der LED,
- Figur 2: das Prinzip der Strahlungsreflexion an ei- nem elliptischen Spiegel,
- Figur 3: eine Anordnung mit mehreren elliptischen Spiegeln und gemeinsamen Brennpunkten bzw. Brennlinien,
- Figur 4: eine Ausführungsform mit doppelseitig auf einer Leiterplatte angeordneten LED-Zeilen,
- Figur 5: eine Beleuchtungsanordnung mit einer LED- Zeile,
- Figur 6: eine symmetrische Anordnung zweier LED-Zei- len und zweier elliptischer Spiegel,
- Figur 7: den Querschnitt durch einen Spiegel in Form einer elliptischen Zylindermantelfläche, und
- Figur 8: eine perspektivische Darstellung eines als elliptischer Zylinderspiegel dienenden ge- formten Blechs.

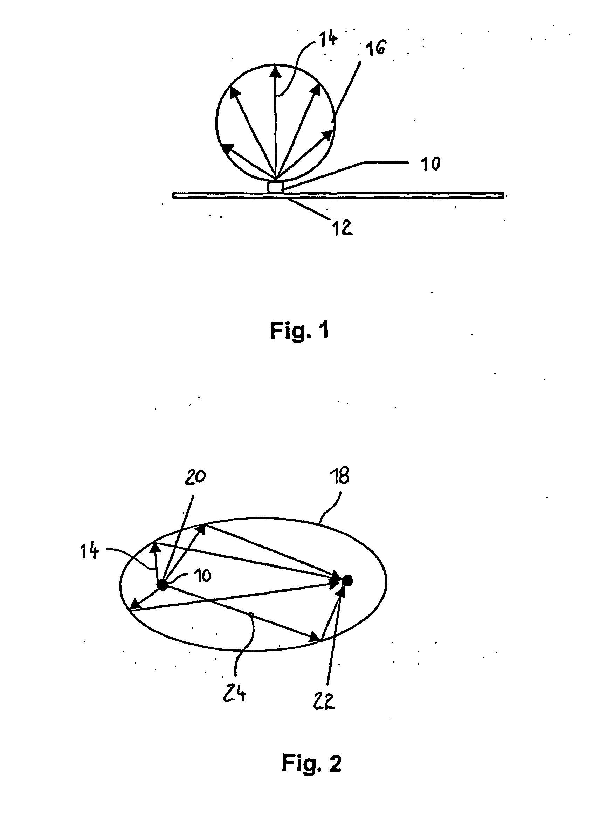

Figur 1 zeigt die Anordnung einer LED 10 auf einer Leiterplatte 12. Diese Leiterplatte 12 trägt Leiterbahnen und gegebenenfalls auch elektronische Komponenten zur Ansteuerung der LED 10. Diese LED 10 sendet polychromatisches Licht, insbesondere weißes Licht aus. Die Erzeugung von polychromatischem Licht ist durch die Verwendung von fluoriszierenden Konvertierungsstoffen beim Halbleiteraufbau der LED möglich. Problematisch ist bei derartigen polychromatischen LEDs 10, daß die abgestrahlte Leistungsdichte relativ gering ist. Beim Einsatz polychromatischer LEDs für Abtastsysteme oder Zeilen-Abtastsystemen mit hohen Anforderungen an die Lichtmenge ist daher eine effiziente Fokussierung der emittierten Strahlung erforderlich. In Figur 1 ist dargestellt, daß die Strahlung, angedeutet durch Pfeile 14, in den Halbraum nach Art einer kugelförmigen Lichtverteilungskurve 16 erfolgt.

Figur 2 zeigt das bei der Erfindung verwendete Prinzip. Wird in einem elliptischen Spiegel 18 mit den beiden Brennpunkten 20, 22 im Brennpunkt 20 eine polychromatische LED 10 angeordnet, die Licht gemäß der Lichtverteilungskurve 16 aussendet, so wird dieses Licht am elliptischen Spiegel 18 reflektiert und in den zweiten Brennpunkt 22 fokussiert. Prinzipiell gilt dies für alle Strahlen. Ausgenutzt wird dies jedoch nur für Strahlen, die in den Halbraum in Richtung der Lichtverteilungskurve 16 ausgesendet werden; auch der Strahl 24 wird theoretisch in den Brennpunkt 22 fokussiert. Im allgemeinen reicht es aus, nur einen Abschnitt der Ellipse 18 als Spiegel zu verwenden, um eine ausreichende Bündelung der in den Halbraum ausgesendeten Strahlung zu erreichen. Durch geschickte Wahl der Ellipsenparameter kann eine kompakte geometrische Anordnung mit vielen konstruktiven Freiheitsgraden erreicht werden. Aufgrund der geometrischen Reflexion an der elliptischen Fläche des Spiegels 18 entsteht kein chromatischer Abbildungsfehler; vielmehr werden die Strahlen unterschiedlicher Wellenlänge im Brennpunkt 22 gebündelt, ohne daß Farbränder entstehen.

Um eine zeilenförmige Beleuchtung zu erzielen, wird als Spiegel ein Abschnitt einer inneren Mantelfläche eines elliptischen Zylinders verwendet. Die Brennpunkte 20, 22 sind dann Punkte auf Brennlinien 20, 22. Werden in der Brennlinie 20 mehrere LEDs 10 angeordnet, so entsteht in der Brennlinie 22 eine Leuchtzeile, die sich besonders gut für die optoelektronische Abtastung von Vorlagen eignet.

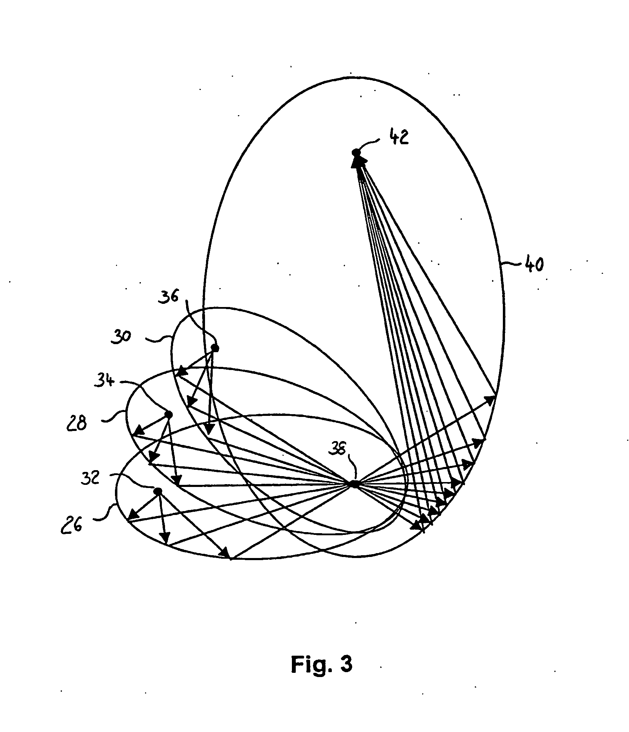

Figur 3 zeigt nun eine Erweiterung des in Figur 2 gezeigten Prinzips durch parallele Fokussierung mithilfe mehrerer elliptischer Spiegel 26, 28, 30, wobei wiederum Spiegelabschnitte zur Reflexion der Strahlung ausreichen. In den jeweiligen ersten Brennpunkten bzw. Brennlinien 32, 34, 36 werden eine bzw. mehrere LEDs nach Art der LED 10 angeordnet. Die verschiedenen Spiegel 26, 28, 30 haben einen gemeinsamen zweiten Brennpunkt 38 bzw. eine gemeinsame Brennlinie 38. Dieser Brennpunkt 38 bzw. Brennlinie 38 ist wiederum erster Brennpunkt 38 oder Brennlinie 38 eines weiteren elliptischen Sammelspiegels 40 mit einem zweiten Brennpunkt 42 bzw. Brennlinie 42, wenn der Sammelspiegel 40 als elliptischer Zylinderspiegel ausgebildet ist.

Unter der Annahme, daß die Spiegel 26, 28, 30, 40 elliptische Zylinderspiegelabschnitte haben, wird die von den ersten Brennlinien 32, 34, 36 ausgehende Strahlung in der für alle Spiegel 26, 28, 30 gemeinsamen zweiten Brennlinie 38 gebündelt. Die von dieser Brennlinie 38, die mit der ersten Brennlinie 38 des Spiegels 40 übereinstimmt, ausgehende Strahlung wird in der zweiten Brennlinie 42 des Spiegels 40 gebündelt. Durch die Hintereinanderschaltung der verschiedenen Spiegel ist es also möglich, die Leuchtdichte in der Brennlinie 42 noch weiter zu erhöhen. Die Kaskadierung mit weiteren Spiegeln kann fortgesetzt werden, indem die Brennlinie 42 die erste Brennlinie eines weiteren Sammelspiegels (nicht dargestellt) ist. Die Strahlung wird dann in dessen zweite Brennlinie abgebildet.

Für den Fall, daß nicht eine Leuchtzeile erzeugt werden soll, sondern ein Leuchtfleck, ist als Spiegel ein Rotationselement zu verwenden, beispielsweise ein Abschnitt eines Ellipsoids. Ein derartiger Spiegel hat dann keine Brennlinien sondern Brennpunkte. Die von den Brennpunkten 32, 34, 36 ausgehende Strahlung wird dann an den ellipsoiden Spiegelflächen der Spiegel 26, 28, 30 in den Brennpunkt 38 fokussiert, der mit dem ersten Brennpunkt des ellipsoiden Sammelspiegels 40 übereinstimmt. Die vom Brennpunkt 38 ausgehende Strahlung wird dann in den Brennpunkt 42 gebündelt, wo ein Leuchtfleck hoher Strahlungsdichte entsteht.

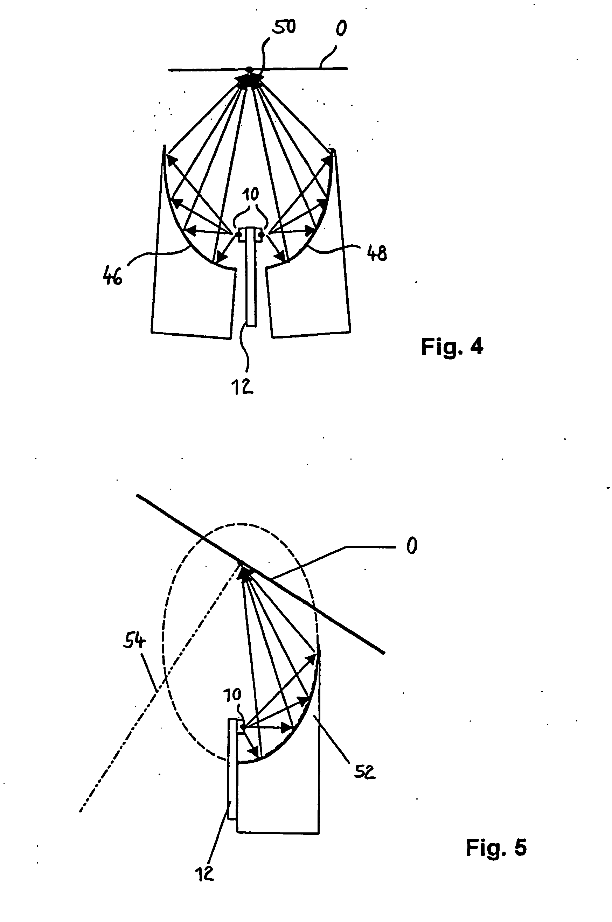

Figur 4 zeigt eine Anordnung einer Vorrichtung zum zeilenförmigen Beleuchten eines Objektes O, wobei gleiche Teile weiterhin gleich bezeichnet werden. Auf der Leiterplatte 12 sind in einer Zeile beidseitig der Leiterplatte 12 LEDs 10 angeordnet. Diese LEDs 10 sind längs der ersten Brennlinie zweier elliptischer Zylinderspiegel 46, 48 angeordnet. Diese Spiegel 46, 48 fokussieren die Strahlung in ihre jeweils zweite Brennlinie 50, die örtlich übereinstimmen und das Objekt O beleuchten. Die dargestellte Vorrichtung hat einen kompakten Aufbau, da die Emissionscharakteristik der LED, die nur in einen Halbraum Strahlung aussendet, mit den günstigen Abbildungseigenschaften der elliptischen Spiegel 46, 48 verknüpft ist. Auf diese Weise ist es möglich, mithilfe relativ kleiner Spiegelelemente die gesamte emittierte Strahlung zu erfassen. Durch Wahl der Ellipsenparameter kann ein weitgehend kompakter Aufbau erreicht werden, so daß auch über eine relativ große Entfernung hinweg Strahlung auf dem Objekt O gebündelt werden kann.

Figur 5 zeigt einen Aufbau mit nur einer Zeile von LEDs 10 auf der Leiterplatte 12. Der elliptische Spiegel 52 ist unmittelbar mit der Leiterplatte 12 verbunden, wodurch sich ein konstruktiv einfacher Aufbau ergibt. Das zu beleuchtende Objekt O ist gegenüber der Vertikalen, in der die Leiterplatte 12 liegt, verkippt. Aus Richtung 54 wird das zeilenförmig beleuchtete Objekt O mithilfe einer Kamera (nicht dargestellt) abgetastet.

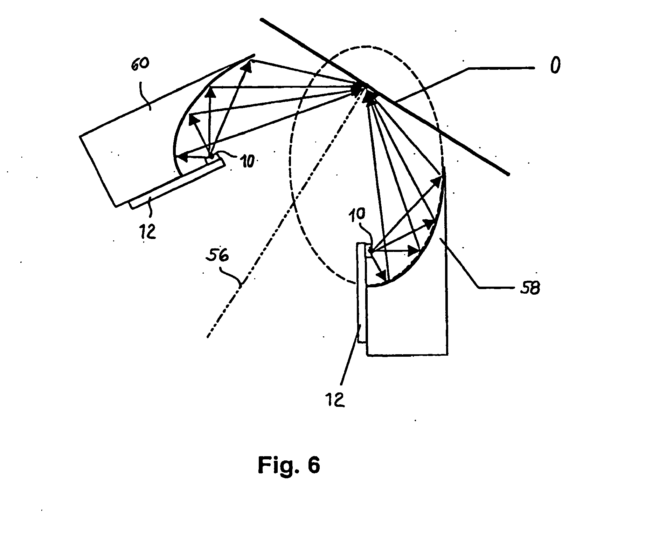

Figur 6 zeigt einen Aufbau symmetrisch zu einer Symmetrieachse 56, die senkrecht auf dem Objekt O, z.B. eine Druckvorlage, steht. Die Symmetrieachse 56 bildet gleichzeitig auch die Mittelachse des Blickwinkels für eine Abtastkamera. Die elliptischen Spiegel 58, 60 bilden mit der Leiterplatte 12 jeweils eine Baueinheit. Aus der Richtung 56 kann frei zu der auf dem Objekt O entstehenden Leuchtzeile zugegriffen werden. Bei der gezeigten Anordnung wird ein Schattenwurf weitgehend vermieden.

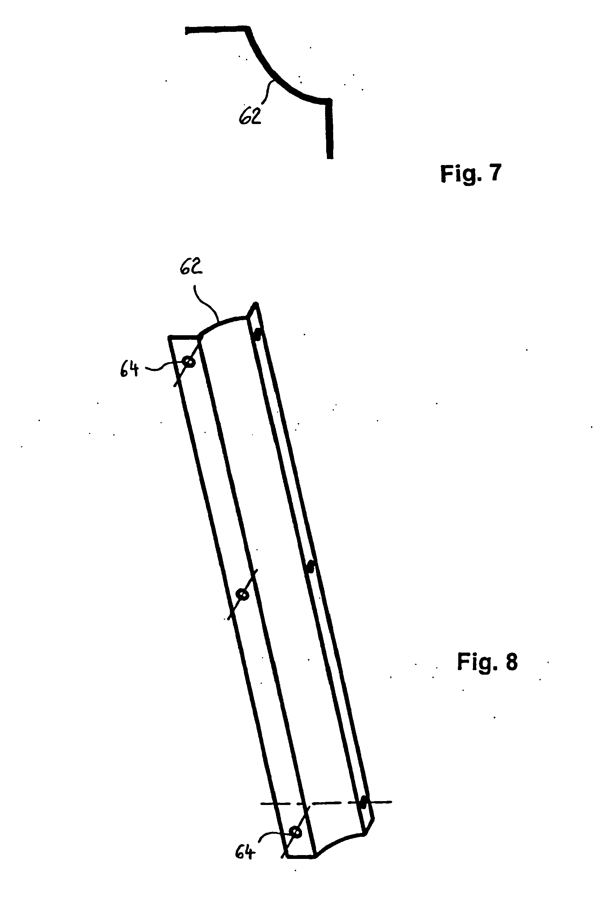

Figur 7 zeigt in einem Querschnitt den Aufbau des elliptischen Spiegelzylinders 62. Er wird durch Formen eines Blechs, beispielsweise der Dicke 0,5 mm, hergestellt.

Figur 8 zeigt eine perspektivische Darstellung des elliptischen Zylinderspiegels 62, an dessen Rändern Befestigungslöcher 64 vorgesehen sind.

Die gezeigten Vorrichtungen lassen sich besonders vorteilhaft für Bildabtastsysteme, digitale Scanner und Kopiersysteme verwenden.

### Bezugszeichenliste

- 10: LED
- 12: Leiterplatte
- 14: Strahlungspfeile
- 16: Lichtverteilungskurve
- 18: elliptischer Spiegel
- 20,22: Brennpunkte, Brennlinien
- 24: Strahl
- 26,28,30: elliptischer Spiegel
- 32,34,36: Brennlinien, Brennpunkte
- 38: zweiter Brennpunkt, zweite Brennlinie
- 40: Sammelspiegel
- 42: zweiter Brennpunkt, zweite Brennlinie
- 46,48: elliptische Zylinderspiegel
- 50: zweite Brennlinie
- O: Objekt
- 52: elliptischer Spiegel
- 54: Richtungsachse
- 56: Symmetrieachse
- 58,60: elliptischer Spiegel
- 62: elliptischer Zylinderspiegel aus Blech
- 64: Befestigungslöcher

## Patentansprüche

1. Vorrichtung zum Beleuchten eines Objektes (0,
bei der mindestens ein ortsfest angeordneter Spiegel (26, 28, 30, 40, 46, 48, 52, 58, 60, 62) einen konkav gewölbten Abschnitt und zwei Brennpunkte (32, 38; 34, 38; 36, 38; 38, 42; 50) hat,
an einem der Brennpunkte (32, 34, 36) mindestens eine LED (10) angeordnet ist,
die Strahlung in Richtung des Spiegels aussendet, wobei die ausgesendete Strahlung an dem zweiten Brennpunkt (38, 42, 50) gesammelt wird,
**dadurch gekennzeichnet, dass** mehrere Spiegel (26, 28, 30) mit jeweils einem ersten Brennpunkt (32, 34, 36) und einem zweiten Brennpunkt (38) vorgesehen sind,
je Spiegel (26, 28, 30) mindestens eine LED (10) im ersten Brennpunkt (32, 34, 36) angeordnet ist, die polychromatische Strahlung in Richtung des jeweiligen Spiegels (26, 28, 30) aussendet,
und dass die von den Spiegeln (26, 28, 30) reflektierte Strahlung in einem gemeinsamen zweiten Brennpunkt (38) zum Beleuchten des Objektes gesammelt wird

2. Vorrichtung nach Anspruch 1,
bei der die Spiegel die Form der inneren Mantelfläche eines Ellipsoids haben.

3. Vorrichtung nach Anspruch 1,
bei der die Spiegel einen langgestreckten zylinderförmigen Abschnitt aufweisen und jeder der Brennpunkte Bestandteil einer Brennlinie ist.

4. Vorrichtung nach Anspruch 3,
bei der je Spiegel (26, 28, 30) mehrere LEDs (10) längs der ersten Brennlinie (32, 34, 36) angeordnet sind, die Strahlung in Richtung des jeweiligen Spiegels (26, 28, 30) aussenden,
und dass die von den mehreren Spiegeln (26, 28, 30) reflektierte Strahlung in einer gemeinsamen zweiten Brennlinie (38) gesammelt wird.

5. Vorrichtung nach Anspruch 3 oder 4,
wobei ein Sensor vorgesehen ist, der die von einem sich in der zweiten Brennlinie (38) befindlichen Objekt (0) abgestrahlte Strahlung zum zeilenförmigen Abtasten des Objektes (0) erfasst.

6. Vorrichtung nach einem der Ansprüche 1 bis 5, bei der ein Sammelspiegel (40) mit zwei Brennlinien (38, 42) vorgesehen ist, dessen erste Brennlinie (38) mit dem gemeinsamen Brennpunkt bzw. der genannten gemeinsamen Brennlinie (38) übereinstimmt,
und bei der die von der ersten Brennlinie (38) herkommende Strahlung im zweiten Brennpunkt bzw. in der zweiten Brennlinie (42) des Sammelspiegels (40) gesammelt wird.

7. Vorrichtung nach einem der Ansprüche 1 bis 6, bei der eine Kaskadierung mit mehreren Sammelspiegeln mit jeweils zwei Brennpunkte bzw. Brennlinien vorgesehen ist, bei der ein vorgelagerter Sammelspiegel die von seinem ersten Brennpunkt bzw. seiner ersten Brennlinie ausgehende Strahlung in seinem zweiten Brennpunkt bzw. seiner zweiten Brennlinie sammelt,
und bei der der erste Brennpunkt bzw. die erste Brennlinie des nachgelagerten Sammelspiegels mit dem zweiten Brennpunkt bzw. der zweiten Brennlinie des vorgelagerten Sammelspiegels übereinstimmt und die Strahlung in seinem zweiten Brennpunkt bzw. seiner zweiten Brennlinie sammelt.

8. Vorrichtung nach einem der Ansprüche 1 bis 7, bei der die LEDs sichtbares Licht aussenden, vorzugsweise weißes Licht.

9. Vorrichtung nach einem der vorhergehenden Ansprüche, bei der das zu beleuchtende Objekt (0) längs dem zweiten Brennpunkt bzw. der zweiten Brennlinie (22; 38) des Spiegels (18) oder der Vielzahl von Spiegeln (26, 28, 30) oder bei einer Kaskadierung im zweiten Brennpunkt bzw. in der zweiten Brennlinie (42) des nachgelagerten letzten Sammelspiegels (40) angeordnet ist.

10. Vorrichtung nach einem der vorhergehenden Ansprüche, bei der die LEDs (10) auf einer Leiterplatte (12) in einer Zeile angeordnet sind, und bei der nahe der Leiterplatte (12) oder mit dieser verbunden der Spiegel (52) angeordnet ist.

11. Vorrichtung nach einem der vorhergehenden Ansprüche, bei der eine Leiterplatte (12) doppelseitig mit je einer Zeile von LEDs (10) bestückt ist,
und bei der auf jeder Seite der Leiterplatte (12) ein Spiegel (46, 48) angeordnet ist, deren zweite Brennpunkte bzw. deren zweiten Brennlinien sich in einer Sammelbrennlinie (50) treffen.

12. Vorrichtung nach einem der vorhergehenden Ansprüche, bei der symmetrisch zu einer Symmetrieachse (56) zwei Leiterplatten (12) mit LEDs (10) und je einem Spiegel (58, 60) angeordnet sind,
die zweiten Brennpunkte bzw. Brennlinien der Spiegel (58, 60) sich in einer Sammelbrennlinie auf der Symmetrieachse (56) treffen,
und bei der das zu beleuchtende Objekt (0) in dieser Sammelbrennlinie angeordnet ist.

13. Vorrichtung nach einem der vorhergehenden Ansprüche, bei der eine Kamera das beleuchtete Objekt (0) abtastet.

14. Verfahren zum zeilenförmigen Beleuchten eines Objektes (0),
bei dem mindestens ein ortsfest angeordneter Spiegel (26, 28, 30, 40, 46, 48, 52, 58, 60, 62) einen konkav gewölbten langgestreckten zylinderförmigen Abschnitt und zwei Brennlinien (32, 38; 34, 38; 36, 38; 38, 42; 50) hat,
längs einer Brennlinie (32, 34, 36) mehrere LEDs (10) Strahlung in Richtung des Spiegels (26, 28, 30, 40, 46, 48, 52, 58, 60, 62) aussenden,
die ausgesendete Strahlung in der zweiten Brennlinie (38, 42, 50) gesammelt wird,
und bei dem der zylinderförmige Abschnitt des Spiegels (26, 28, 30, 40, 46, 48, 52, 58, 60, 62) die Form der inneren Mantelfläche eines elliptischen Zylinders hat,
**dadurch gekennzeichnet, dass** mehrere Spiegel (26, 28, 30) mit jeweils einer ersten Brennlinie (32, 34, 36) und einer zweiten Brennlinie (38) verwendet werden,
je Spiegel (26, 28, 30) mehrere LEDs (10) längs der ersten Brennlinie (32, 34, 36) angeordnet sind, die polychromatische Strahlung in Richtung des jeweiligen Spiegels (26, 28, 30) aussenden,
und dass die von den mehreren Spiegeln (26, 28, 30) reflektierte Strahlung in einer gemeinsamen zweiten Brennlinie (38) zum Beleuchten des Objektes gesammelt wird

15. Verfahren nach Anspruch 14 bei dem ein Sammelspiegeln (40) mit zwei Brennlinien (38, 42) verwendet wird, dessen erste Brennlinie (38) mit der genannten gemeinsamen Brennlinie (38) übereinstimmt,
und bei dem die von der ersten Brennlinie (38) herkommende Strahlung in der zweiten Brennlinie (42) des Sammelspiegels (40) gesammelt wird.

16. Verfahren nach Anspruch 14 oder 15 bei dem eine Kaskadierung mit mehreren Sammelspiegeln mit jeweils zwei Brennlinien vorgesehen ist, bei der ein vorgelagerter Sammelspiegel die von seiner ersten Brennlinie ausgehende Strahlung in seiner zweiten Brennlinie sammelt,
und bei dem die erste Brennlinie des nachgelagerten Sammelspiegels mit der zweiten Brennlinie des vorgelagerten Sammelspiegels übereinstimmt und die Strahlung in seiner zweiten Brennlinie sammelt.

17. Verfahren nach einem der Ansprüche 14 bis 16 bei dem die LEDs sichtbares Licht aussenden, vorzugsweise weißes Licht.

18. Verfahren nach einem der Ansprüche 14 bis 17, bei dem das zu beleuchtende Objekt (0) längs der zweiten Brennlinie (22; 38) des Spiegels (18) oder der Vielzahl von Spiegeln (26, 28, 30) oder bei einer Kaskadierung in der zweiten Brennlinie (42) des nachgelagerten letzten Sammelspiegels (40) angeordnet wird.

19. Verfahren nach einem der Ansprüche 14 bis 18, bei dem eine Kamera das beleuchtete Objekt (0) abtastet.

## Claims

1. Device for illuminating an object (O),
wherein at least one stationary mirror (26, 28, 30, 40, 46, 48, 52, 58, 60, 62) has a dished section and two foci (32, 38; 34, 38; 36, 38; 38, 42; 50),
wherein at least one LED (10) which emits radiation towards the mirror is located at one of the foci (32, 34, 36), the emitted radiation being collected at the second focus (38, 42, 50),
**characterised in that** a plurality of mirrors (26, 28, 30), each having a first focus (32, 34, 36) and a second focus (38), is provided,
**in that** for each mirror (26, 28, 30) at least one LED (10) which emits polychromatic radiation towards the respective mirror (26, 28, 30) is located in the first focus (32, 34, 36),
and **in that** the radiation reflected by the mirrors (26, 28, 30) is collected in a common second focus (38) to illuminate the object.

2. Device according to claim 1,
wherein the mirrors have the shape of the inner circumferential surface of an ellipsoid.

3. Device according to claim 1,
wherein the mirrors have an elongated cylindrical section and each of the foci is a part of a focal line.

4. Device according to claim 3,
wherein for each mirror (26, 28, 30) several LEDs (10) which emit radiation towards the respective mirror (26, 28, 30) are arranged along the first focal line (32, 34, 36),
and wherein the radiation reflected by the plurality of mirrors (26, 28, 30) is collected in a common second focal line (38).

5. Device according to claim 3 or 4,
wherein a sensor is provided which detects the radiation emitted by an object (O) located in the second focal line (38) for line scanning of the object (O).

6. Device according to any of claims 1 to 5,
wherein a concave mirror (40) with two focal lines (38, 42) is provided, the first focal line (38) of which coincides with the common focus or the said common focal line (38) respectively,
and wherein the radiation coming from the first focal line (38) is collected in the second focus or the second focal line (42) respectively of the concave mirror (40).

7. Device according to any of claims 1 to 6,
wherein a cascade arrangement comprising a plurality of concave mirrors, each having two foci or focal lines, is provided, in which a concave mirror placed in front collects the radiation coming off its first focus or its first focal line respectively in its second focus or its second focal line respectively,
and wherein the first focus or the first focal line respectively of the concave mirror placed behind coincides with the second focus or the second focal line respectively of the concave mirror placed in front and collects the radiation in its second focus or its second focal line respectively.

8. Device according to any of claims 1 to 7,
wherein the LEDs emit a visible, preferably white, light.

9. Device according to any of the preceding claims,
wherein the object (O) to be illuminated is arranged along the second focus or the second focal line (22; 38) respectively of the mirror (18) or the plurality of mirrors (26, 28, 30), or, in a cascade arrangement, in the second focus or in the second focal line (42) respectively of the placed-behind, last concave mirror (40).

10. Device according to any of the preceding claims,
wherein the LEDs (10) are arranged in a row on a printed circuit board (12), and wherein the mirror (52) is located close to the printed circuit board (12) or connected thereto.

11. Device according to any of the preceding claims,
wherein a row of LEDs (10) is mounted on each side of a printed circuit board (12),
and wherein a mirror (46, 48), the second foci or second focal lines respectively of which meet in a collective focal line (50), is located on each side of a printed circuit board (12).

12. Device according to any of the preceding claims,
wherein two printed circuit boards (12), each with LEDs (10) and a mirror (58, 60), are arranged symmetrically with respect to an axis of symmetry (56),
wherein the second foci or second focal lines respectively of the mirror (58, 60) meet in a collective focal line on the axis of symmetry (56),
and wherein the object (O) to be illuminated is located in this collective focal line.

13. Device according to any of the preceding claims,
wherein a camera scans the illuminated object (O).

14. Method for the line illumination of an object (O),
wherein at least one stationary mirror (26, 28, 30, 40, 46, 48, 52, 58, 60, 62) has a dished, elongated, cylindrical section and two focal lines (32, 38; 34, 38; 36, 38; 38, 42; 50),
wherein several LEDs (10) emit radiation towards the mirror (26, 28, 30, 40, 46, 48, 52, 58, 60, 62) along a focal line (32, 34, 36),
wherein the emitted radiation is collected in the second focal line (38, 42, 50),
and wherein the cylindrical section of the mirror (26, 28, 30, 40, 46, 48, 52, 58, 60, 62) has the shape of the inner circumferential surface of an elliptic cylinder,
**characterised in that** a plurality of mirrors (26, 28, 30), each having a first focal line (32, 34, 36) and a second focal line (38), is used,
**in that** for each mirror (26, 28, 30) several LEDs (10) which emit polychromatic radiation towards the respective mirror (26, 28, 30) are arranged along the first focal line (32, 34, 36),
and **in that** the radiation reflected by the plurality of mirrors (26, 28, 30) is collected in a common second focal line (38) to illuminate the object.

15. Method according to claim 14, wherein a concave mirror (40) with two focal lines (38, 42) is used, the first focal line (38) of which coincides with the said common focal line (38),
and wherein the radiation coming from the first focal line (38) is collected in the second focal line (42) of the concave mirror (40).

16. Method according to claim 14 or 15,
wherein a cascade arrangement comprising a plurality of concave mirrors, each having two focal lines, is provided, in which a concave mirror placed in front collects in its second focal line the radiation emanating from its first focal line,
and wherein the first focal line of the concave mirror placed behind coincides with the second focal line of the concave mirror placed in front and collects the radiation in its second focal line.

17. Method according to any of claims 14 to 16,
wherein the LEDs emit a visible, preferably white, light.

18. Method according to any of claims 14 to 17,
wherein the object (O) to be illuminated is arranged along the second focal line (22; 38) of the mirror (18) or the plurality of mirrors (26, 28, 30), or, in a cascade arrangement, in the second focal line (42) of the placed-behind, last concave mirror (40).

19. Method according to any of claims 14 to 18,
wherein a camera scans the illuminated object (O).

## Revendications

1. Dispositif pour éclairer un objet (0),
dans lequel au moins un miroir agencé stationnaire (26, 28, 30, 40, 46, 48, 52, 58, 60, 62) possède un tronçon à courbure concave et deux foyers (32, 38 ; 34, 38 ; 36, 38 ; 38, 42 ; 50),
au moins une diode électroluminescente (10) est agencée à l'un des foyers (32, 34, 36),
laquelle émet un rayonnement en direction du miroir, de sorte que le rayonnement émis est regroupé au second foyer (38, 42, 50), **caractérisé en ce qu'**il est prévu plusieurs miroirs (26, 28, 30) avec chacun un premier foyer (32, 34, 36) et un second foyer (38),
pour chaque miroir (26, 28, 30), au moins une diode électroluminescente (10) est agencée au premier foyer (32, 34, 36), laquelle émet un rayonnement polychromatique en direction du miroir respectif (26, 28, 30),
et **en ce que** le rayonnement réfléchi par les miroirs (26, 28, 30) est regroupé à un second foyer commun (38) pour l'éclairage de l'objet.

2. Dispositif selon la revendication 1, dans lequel les miroirs ont la forme de la surface enveloppe intérieure d'un ellipsoïde.

3. Dispositif selon la revendication 1, dans lequel les miroirs comprennent un tronçon allongé de forme cylindrique, et chacun des foyers est un composant d'une ligne focale.

4. Dispositif selon la revendication 3, dans lequel plusieurs diodes électroluminescentes (10) sont agencées pour chaque miroir (26, 28, 30) le long de la première ligne focale (32, 34, 36), lesquelles émettent un rayonnement en direction du miroir respectif (26, 28, 30), et en ce que le rayonnement réfléchi par les plusieurs miroirs (26, 28, 30) est regroupé sur une seconde ligne focale commune (38).

5. Dispositif selon la revendication 3 ou 4,
dans lequel il est prévu un capteur, qui détecte le rayonnement, émis par un objet (0) qui se trouve au niveau de la seconde ligne focale (38), pour un palpage linéaire de l'objet (0).

6. Dispositif selon l'une des revendications 1 à 5, dans lequel il est prévu un miroir collecteur (40) avec deux lignes focales (38, 42), dont la première ligne focale (38) coïncide avec le foyer commun ou avec ladite ligne focale commune (38),
et dans lequel le rayonnement provenant de la première ligne focale (38) est regroupé au second foyer ou à la seconde ligne focale (42) du miroir collecteur (40).

7. Dispositif selon l'une des revendications 1 à 6, dans lequel il est prévu une mise en cascade avec plusieurs miroirs collecteurs comprenant chacun deux foyers ou deux lignes focales, dans lequel un miroir collecteur placé en amont regroupe le rayonnement provenant de son premier foyer ou de sa première ligne focale vers son second foyer au vers sa seconde ligne focale,
et dans lequel le premier foyer ou la première ligne focale du miroir collecteur placé en aval coïncide avec le second foyer ou avec la seconde ligne focale du miroir collecteur placé en amont, et regroupe le rayonnement à son second foyer ou à sa seconde ligne focale.

8. Dispositif selon l'une des revendications 1 à 7, dans lequel les diodes électroluminescentes émettent une lumière visible, de préférence de la lumière blanche.

9. Dispositif selon l'une des revendications précédentes, dans lequel l'objet à éclairer (0) est agencé le long du second foyer ou de la seconde ligne focale (22 ; 38) du miroir (18) ou de la pluralité de miroirs (26, 28, 30), ou bien dans le cas d'une mise en cascade, au second foyer ou à la seconde ligne focale (42) du dernier miroir collecteur (40) placé en aval.

10. Dispositif selon l'une des revendications précédentes, dans lequel les diodes électroluminescentes (10) sont agencées sur une carte à circuits (12) sur une ligne, et dans lequel le miroir (52) est agencé à proximité de la carte à circuits (12) ou relié à celle-ci.

11. Dispositif selon l'une des revendications précédentes, dans lequel une carte à circuits (12) est équipée sur ses deux côtés respectivement d'une ligne de diodes électroluminescentes (10),
et dans lequel un miroir (46, 48) est agencé sur chaque côté de la carte à circuits (12), miroirs dont les seconds foyers ou dont les secondes lignes focales se rencontrent dans une ligne focale de collecte (50).

12. Dispositif selon l'une des revendications précédentes, dans lequel deux cartes à circuits (12) avec des diodes électroluminescentes (10) et un miroir respectif (58, 60) sont agencées de manière symétrique à un axe de symétrie (56),
les deux foyers ou les deux lignes focales des miroirs (58, 60) se rencontrent en une ligne focale collectrice sur l'axe de symétrie (56),
et dans lequel l'objet à éclairé (O) est agencé sur cette ligne focale collectrice.

13. Dispositif selon l'une des revendications précédentes, dans lequel une caméra palpe l'objet éclairé (O).

14. Procédé pour l'éclairage d'un objet (O) sous la forme d'une ligne, dans lequel au moins un miroir agencé stationnaire (26, 28, 30, 40, 46, 48, 52, 58, 60, 62) possède une portion allongée de forme cylindrique et bombée de manière concave et deux lignes focales (32, 38 ; 34, 38 ; 36, 38 ; 38, 42 ; 50),
le long d'une ligne focale (32, 34, 36), plusieurs diodes électroluminescentes (10) émettent un rayonnement en direction du miroir (26, 28, 30, 40, 46, 48, 52, 58, 60, 62),
le rayonnement émis est regroupé sur la seconde ligne focale (38, 42, 50),
et dans lequel le tronçon de forme cylindrique du miroir (26, 28, 30, 40, 46, 48, 52, 58, 60, 62) possède la forme de la surface enveloppe intérieure d'un cylindre elliptique,
**caractérisé en ce que** l'on utilise plusieurs miroirs (26, 28, 30) ayant chacun une première ligne focale (32, 34, 36) et une seconde ligne focale (38),
pour chaque miroir (26, 28, 30), plusieurs diodes électroluminescentes (10) sont agencées le long de la première ligne focale (32, 34, 36), lesquelles émettent un rayonnement polychromatique en direction du miroir respectif (26, 28, 30),
et **en ce que** le rayonnement réfléchi par lesdits plusieurs miroirs (26, 28, 30) est regroupé sur une seconde ligne focale commune (38) pour l'éclairage de l'objet.

15. Procédé selon la revendication 14, dans lequel on utilise un miroir collecteur (40) avec deux lignes focales (38, 42), dont la première ligne focale (38) coïncide avec la ligne focale commune précitée (38),
et dans lequel le rayonnement provenant de la première ligne focale (38) est regroupé sur la seconde ligne focale (42) du miroir collecteur (40).

16. Procédé selon la revendication 14 ou 15, dans lequel on prévoit une mise en cascade avec plusieurs miroirs collecteurs comprenant chacun deux lignes focales, dans lequel un miroir collecteur en amont regroupe sur sa seconde ligne focale le rayonnement provenant de sa première ligne focale,
et dans lequel la première ligne focale du miroir collecteur placé en aval coïncide avec la seconde ligne focale du miroir collecteur placé en amont, et regroupe le rayonnement sur sa seconde ligne focale.

17. Procédé selon l'une des revendications 14 à 16, dans lequel les diodes électroluminescentes émettent de la lumière visible, de préférence de la lumière blanche.

18. Procédé selon l'une des revendications 14 à 17, dans lequel l'objet à éclairer (10) est agencé le long de la seconde ligne focale (22 ; 38) du miroir (18) ou de la pluralité de miroirs (26, 28, 30), ou bien dans le cas d'une mise en cascade, il est agencé sur la seconde ligne focale (42) du dernier miroir collecteur (40) placé en aval.

19. Procédé selon l'une des revendications 14 à 18, dans lequel une caméra palpe l'objet éclairé (O).
